# FASCICULE DE BREVET EUROPEEN

(11) **EP 0 948 019 B1**
(45) Date de publication et mention de la délivrance du brevet: **22.02.2006**
(21) Numéro de dépôt: 99200621.3
(22) Date de dépôt: 03.03.1999
(51) Int. Cl.: H01H 57/00, H04B 1/48

(54) **Dispositif de commutation d'antenne entre des étages d'émission et de réception**
Antennenschalter zwischen Sender- und Empfängerstufen
Antenna switch between transmitter and receiver stages

(30) Priorité: 10.03.1998 FR 9802907
(43) Date de publication de la demande: 06.10.1999
(73) Titulaire: Koninklijke Philips Electronics N.V., 5621 BA Eindhoven (NL)
(72) Inventeur: Jacob, Hervé, 75008 Paris (FR)
(74) Mandataire: Landousy, Christian

(56) Documents cités:
- US-A- 4 916 349
- US-A- 5 578 976

## Description

La présente invention concerne un dispositif de commutation d'antenne entre la sortie d'un étage d'émission et l'entrée d'un étage de réception. L'invention est utilisable plus particulièrement dans les téléphones mobiles.

Dans un système tel qu'un radiotéléphone cellulaire à modulation dite TDMA (de l'anglais Time Division Multiple Access), l'antenne doit être alternativement utilisée en sortie du circuit d'émission ou à l'entrée du circuit de réception. Il est alors nécessaire d'isoler l'un de l'autre chacun de ces deux circuits. En effet, si le circuit d'émission n'est pas correctement isolé, une partie significative de la puissance à émettre passe dans le circuit de réception, non utilisé à ce moment ; en outre, une partie de la puissance à émettre est renvoyée vers sa source sans même être parvenue à l'antenne. De même, à la réception, une mauvaise isolation par rapport au circuit d'émission conduirait à des pertes par dissipation ou par désadaptation.

A l'heure actuelle, les relais électrostatiques, tels que décrits par exemple dans le document US-A-5578976, ne sont pas assez rapides, et ce type de commutation d'antenne ne peut être réalisé, pour obtenir la durée de vie et la rapidité souhaitables, qu'à l'aide de semiconducteurs tels qu'une diode PIN. Mais, avec un tel élément, les pertes sont d'au moins 1 décibel, du fait de sa résistance série et de la limite de courant qui lui est imposée (de l'ordre de 1 milliampère). D'autre part, le point de compression d'un tel commutateur est peu élevé, et sa linéarité est donc médiocre.

Un but de l'invention est donc de proposer un dispositif de commutation d'antenne remédiant aux inconvénients cités ci-dessus.

A cet effet l'invention concerne un dispositif selon la revendication 1.

Le dispositif ainsi proposé assure avec de très faibles pertes une commutation haute fréquence à impédance contrôlée d'une durée inférieure à 1 milliseconde, avec une tenue en puissance adaptée au niveau de sortie du circuit d'émission, permettant même de supporter momentanément l'absence de connexion de l'antenne dans le cas d'une mauvaise manipulation de l'utilisateur. La conservation de l'impédance caractéristique limite par ailleurs la valeur des pertes par désadaptation et contribue à maintenir à une faible valeur la puissance consommée par le dispositif, dont le poids et l'encombrement mécanique limités sont aussi des atouts.

Selon deux variantes possibles de réalisation, les parties basses respectives desdites faces intérieures constituent les contacts correspondant à la position de repos et leurs parties hautes les contacts correspondant à la position de travail, ledit contact mobile étant déplaçable parallèlement aux faces intérieures desdites armatures, ou bien les armatures sont constituées par une association de pièces en saillie, le contact mobile étant déplaçable transversalement auxdites armatures entre les pièces en saillie d'une armature, qui correspondent à la position de repos, et les pièces en saillie de l'autre armature, qui correspondent à la position de travail. Selon une troisième variante de réalisation, ledit actionneur est un moteur piézoélectrique comprenant d'une part une pièce déformable par effet piézoélectrique ou magnétostrictif et un support fixe et d'autre part une pièce mobile formant ledit contact mobile, l'effet piézoélectrique et la friction mécanique entre d'une part la pièce déformable et son support fixe et d'autre part la pièce formant contact mobile étant prévus pour provoquer des déformations alternatives de ladite pièce déformable suivant deux axes transversaux.

Les particularités et avantages de l'invention apparaîtront maintenant de façon plus précise dans la description qui suit et dans les dessins annexés, donnés à titre d'exemples non limitatifs et dans lesquels :
- la figure 1 est un schéma de principe montrant l'agencement d'un dispositif de commutation d'antenne entre les étages d'émission et de réception d'un téléphone mobile ;
- les figures 2 et 3 montrent deux modes de réalisation d'un dispositif de commutation d'antenne selon l'invention ;
- la figure 4 montre un exemple de dispositif de commutation équipé d'un blindage ;
- la figure 5 montre un troisième mode de réalisation d'un dispositif selon l'invention ;
- la figure 6 est un graphique qui met en évidence l'accroissement des pertes avec la fréquence, par désadaptation, et illustre la solution proposée ;
- les figures 7 et 8 montrent deux schémas possibles d'un câblage permettant de remédier à ladite désadaptation.

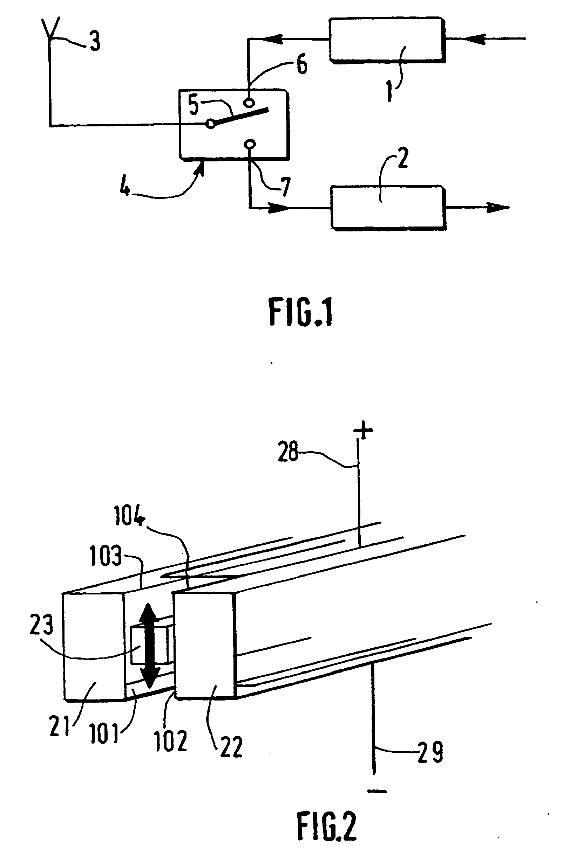

Le système d'émission-réception pour téléphone mobile représenté sur la figure 1 comprend un étage d'émission 1, un étage de réception 2, une antenne 3, et un commutateur 4 permettant de relier l'antenne alternativement à la sortie de l'étage d'émission ou à l'entrée de l'étage de réception. Ce commutateur 4 comprend lui-même un contact mobile 5 relié à l'antenne 3, ainsi qu'un premier contact fixe 6 relié à la sortie de l'étage d'émission 1 et un deuxième contact fixe 7 relié à l'entrée de l'étage de réception 2.

Les étages d'émission et de réception 1 et 2 ne sont pas décrits en détail, car ils n'ont pas, en eux-mêmes, de rapport direct avec l'invention. On précisera simplement que l'étage d'émission comprend en série essentiellement des éléments tels que circuit de génération de signal audio modulé, convertisseur de fréquence, filtre passe-bande, amplificateur haute fréquence, tandis que, réciproquement, l'étage de réception comprend en série essentiellement des éléments tels qu'amplificateur haute fréquence, filtre passe-bande, convertisseur de fréquence.

La figure 2 montre un premier exemple de réalisation, conforme à l'invention, du dispositif de commutation. Ce dispositif est un actionneur piézoélectrique qui comprend deux armatures fixes 21 et 22 et, entre elles, un contact mobile 23 en un matériau piézoélectrique. Les faces intérieures des deux armatures fixes sont localement métallisées pour constituer des contacts électriques. Par "localement", il faut comprendre, dans le mode de réalisation ici décrit, que les parties basses respectives 101 et 102 desdites faces intérieures constituent des contacts correspondant à une position dite de "repos", tandis que leurs parties hautes 103 et 104 constituent des contacts correspondant à une position dite de "travail".

Le fonctionnement du dispositif est le suivant. Des électrodes 28 et 29 appliquent au contact mobile 23 une tension de commande qui déforme ce dernier et le fait passer de sa position "repos" à sa position "travail" ; le retour à la position "repos" intervient à l'issue de cette commande. Ce double mouvement de l'extrémité du contact mobile 23, représenté ici dans la position intermédiaire qu'il occupe au milieu de son déplacement, est illustré sur la figure 2 par la double flèche. Le mouvement piézoélectrique de forte amplitude de ce contact mobile peut être obtenu par un effet de levier, également appelé « actuateur amplifié ». Dans ce cas le déplacement est multiplié par le rapport des distances à l'axe de ce levier.

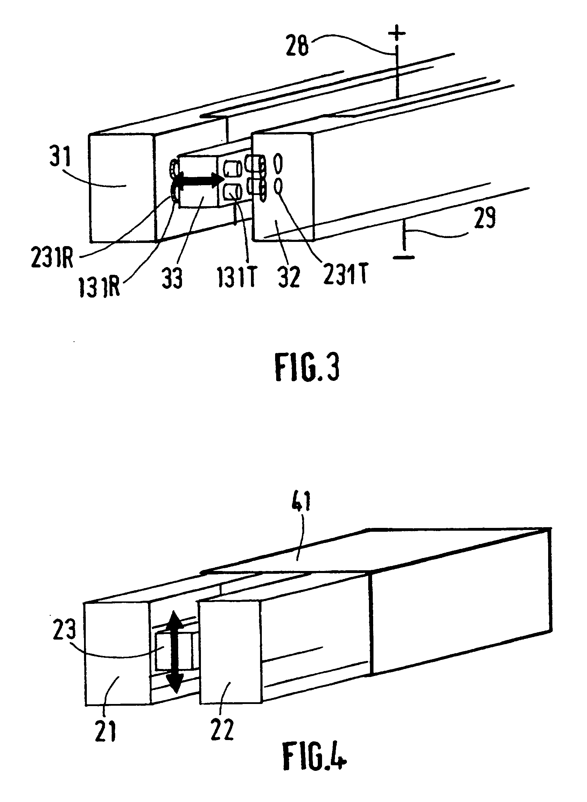

La figure 3 montre un deuxième exemple de réalisation de dispositif de commutation, dans lequel les armatures des condensateurs (maintenant référencées 31 et 32) formant contact sont constituées par une association de petites formes cylindriques qui permettent d'augmenter la valeur de la capacité en jeu. Le fonctionnement est le suivant. Le contact mobile, référencé maintenant 33, se déplace cette fois transversalement aux armatures, suivant un axe parallèle à ceux des cylindres (axe horizontal, sur la figure 3) ; ce contact 33 comprend sur ses deux faces des cylindres métallisés 131R, 131T qui pénètrent dans des puits correspondants 231R, 231T des armatures fixes lorsque le contact 33 se déforme sous l'action de la tension de commande. En l'absence d'une telle tension de commande, les cylindres 131R forment un condensateur de contact haute fréquence avec les puits 231R, du côté de l'armature fixe 31, pour établir le contact "repos" ; lorsque le signal de commande est présent, les cylindres 131T, de façon similaire, constituent un condensateur avec les puits 231T, du côté de l'armature fixe 32, pour établir le contact "travail".

Des valeurs des condensateurs de contact peuvent être données à titre d'exemple pour les deux réalisations des figures 2 et 3, dans l'hypothèse d'une déformation du contact mobile de 1 millimètre. Dans la réalisation de la figure 2, chaque contact est réalisé au moyen de deux condensateurs plans, par exemple de 1 x 4 millimètres, ce qui donne, avec un espacement de 0,1 millimètre pour le jeu mécanique des pièces, une valeur de capacité égale à 0,71 picofarad. Dans la réalisation de la figure 3, chaque contact est constitué de quatre cylindres ayant par exemple une longueur de 1 millimètre et un diamètre de 2 millimètres, et la capacité obtenue est alors de 2,2 picofarads.

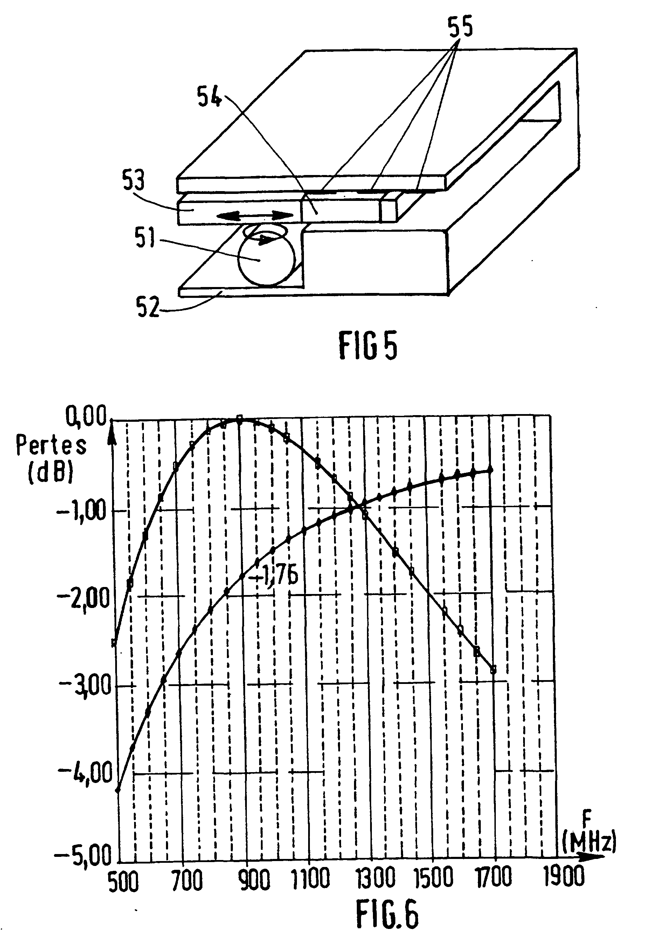

On notera que la conservation de l'impédance caractéristique de ligne, nécessaire à la bonne propagation des signaux haute fréquence, peut être obtenue par une géométrie appropriée du dispositif (cette impédance est fonction de la forme et des dimensions du contact mobile et de la présence d'un blindage connecté à la masse du dispositif pour servir de masse à toute la ligne de transmission, la figure 4 montrant un exemple de disposition d'un tel blindage 41).

Un troisième exemple de réalisation, présenté en figure 5, utilise l'effet piézoélectrique, avec des déformations de faible amplitude (telles que 10 à 20 µm) et la friction mécanique entre une pièce 51 subissant des déformations par effet piézoélectriques (ou bien par effet magnétostricitf) et un support fixe 52 d'une part, et une pièce mobile 53 utilisée comme contact mobile dans le relais haute fréquence considéré d'autre part. Les déformations alternatives de la pièce piézoélectrique 51 sont commandées suivant deux axes perpendiculaires (ou de manière générale, transversaux) de telle sorte qu'un point tangent de sa surface décrive une ellipse, comme représenté pour la pièce cylindrique de la figure 5, et la friction est généralement assurée au moyen de dentures miniatures en titane. Ce dispositif mécanique peut être désigné sous le vocable de « moteur piézoélectrique », et d'autres réalisations classiques en sont connues, parmi lesquelles peuvent être cités les mouvements de translation créés à partir de déformations ondulantes de la surface assurant le fortement par friction, ou les mouvements de translation d'un disque produit par de telles déformations radiales à l'axe de ce disque. Les autres éléments sont similaires, avec une partie métallisée 54 de la pièce mobile 53 réalisant le contact par effet capacitif sur des armatures 55.

Le principal avantage de tels moteurs pour l'utilisation de la piézoélectricité appliquée au commutateur d'antenne réside dans l'absence totale de consommation électrique en dehors des phases de basculement du commutateur ; un tel dispositif mécanique est autobloquant. Pour la commande du mouvement, des signaux de commande alternatifs sont nécessaires suivant les deux axes, mais avec des tensions appliquées très faibles, de l'ordre de quelques volts, résultant de la faible valeur des déformations mécaniques élémentaires. La vitesse de déplacement obtenue peut être élevée et donc compatible avec la rapidité de commutation exigée pour les commutations d'antenne des produits fonctionnant dans les réseaux de communication TDMA. A titre d'exemple, un moteur piézoélectrique animé par des déformations de 25 µm et actionné à la fréquence de 30 kHz aura une vitesse de déplacement égale à 0,75 m/s, ce qui fournit un déplacement de 0,75 mm en 1 milliseconde.

Bien entendu, la présente invention n'est pas limitée aux exemples de réalisation précédemment décrits et représentés, à partir desquels des variantes peuvent être proposées. Par exemple, la réalisation de la figure 2 peut être simplifiée de la façon suivante. Le contact mobile possède des faces métalliques, mais pas de connexion vers l'extérieur. Le contact de la position "repos" s'effectue alors par double effet capacitif entre l'armature fixe métallisée 21 (face intérieure 101) et le contact mobile, puis entre ce même contact mobile et l'armature fixe métallisée 22 (face intérieure 102). De la même façon, en position "travail", la connexion s'effectue par double effet capacitif entre les parties hautes des armatures fixes et le contact mobile.

Par ailleurs, il peut se produire que la commutation par effet capacitif soit insuffisante malgré la fréquence. La courbe A de la figure 6 met en évidence par exemple une perte de l'ordre de 1,8 dB à 900 MHz, par désadaptation due à la présence d'une capacité en série. Il est alors utile de compenser cette désadaptation en prévoyant une inductance en série, de valeur choisie pour résonner, avec ladite capacité, à la fréquence de travail, et, ainsi, annuler les pertes à cette fréquence, comme le montre la courbe B de la figure 6.

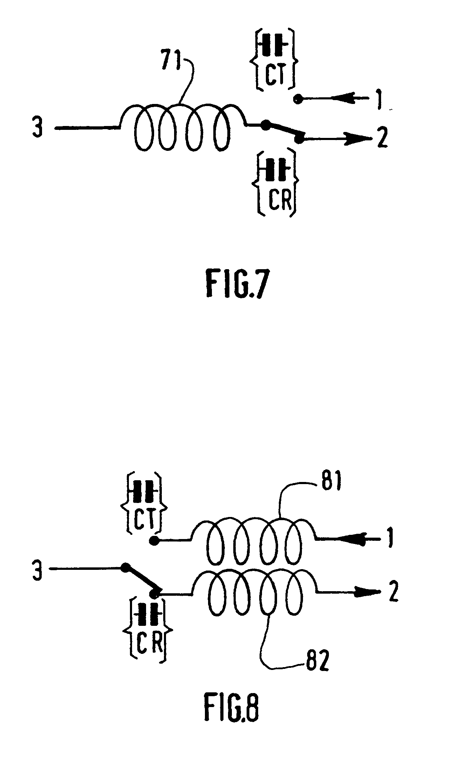

Deux schémas de câblage, représentés sur les figures 7 et 8, peuvent être proposés pour mettre en place cette inductance. Sur la figure 7, une seule inductance 71 est prévue, sur la sortie commune reliée à l'antenne, pour composer chacune des deux capacités CT et CR de connexion dans les états de travail (étage d'émission) et de repos (étage de réception) ; elle peut être une inductance traditionnelle à air, à noyau de ferrite ou de céramique, ou bien être constituée par un tronçon de ligne, et son implantation peut être interne ou externe au dispositif de commutation. Sur la figure 8, deux inductances 81 et 82 sont prévues, l'une dans l'étage d'émission et l'autre dans celui de réception, pour composer chacune des capacités CT et CR ; ce schéma peut convenir pour des impédances de charge non standard, ou pour compenser des capacités différentes selon la position du relais. Dans l'un ou l'autre cas, l'adaptation est réalisée à une fréquence de fonctionnement déterminée et unique. Des circuits d'adaptation associant plusieurs composants sont utilisés si l'on veut réaliser la même fonction sur une bande de fréquence plus large, et en particulier l'optimiser sur deux bandes de fréquences particulières dans le cas d'un émetteur-récepteur multistandard.

## Revendications

1. Dispositif de commutation d'antenne entre la sortie d'un étage d'émission et l'entrée d'un étage de réception, comprenant un actionneur piézoélectrique constitué lui-même de deux armatures fixes (21, 22) formant condensateur et d'un contact mobile (23) en un matériau piézoélectrique, les faces intérieures desdites armatures étant localement métallisées pour constituer des contacts électriques, et des électrodes (28, 29) étant prévues pour appliquer audit contact mobile une tension de commande apte à le déformer, ladite déformation se produisant entre une position dite de repos correspondant à une partie déterminée des armatures et une position dite de travail correspondant à une autre partie déterminée desdites armatures.

2. Dispositif selon la revendication 1, **caractérisé en ce que** les parties basses respectives desdites faces intérieures constituent les contacts correspondant à la position de repos et leurs parties hautes les contacts correspondant à la position de travail, ledit contact mobile étant déplaçable parallèlement aux faces intérieures desdites armatures.

3. Dispositif selon la revendication 1, **caractérisé en ce que** les armatures sont constituées par une association de pièces en saillie, le contact mobile étant déplaçable transversalement auxdites armatures entre les pièces en saillie d'une armature, qui correspondent à la position de repos, et les pièces en saillie de l'autre armature, qui correspondent à la position de travail.

4. Dispositif selon la revendication 1, **caractérisé en ce que** ledit actionneur est un moteur piézoélectrique comprenant d'une part une pièce déformable par effet piézoélectrique ou magnétostrictif et un support fixe et d'autre part une pièce mobile formant ledit contact mobile, l'effet piézoélectrique et la friction mécanique entre d'une part la pièce déformable et son support fixe et d'autre part la pièce formant contact mobile étant prévus pour provoquer des déformations alternatives de ladite pièce déformable suivant deux axes transversaux.

## Claims

1. An antenna switch between the output of a transmitting stage and the input of a receiving stage, comprising a piezoelectric actuator itself formed by two fixed plates (21, 22) forming a capacitor and by a movable contact (23) of a piezoelectric material, the inside surfaces of said plates being locally metallized so as to form electrical contacts, and electrodes (28, 29) being provided so as to supply said movable contact with a control voltage capable of deforming the contact, while said deformation occurs between a rest position corresponding to a given part of the plates, and a working position corresponding to another given part of said plates.

2. A device as claimed in claim 1, **characterized in that** the respective lower parts of said inside surfaces form the contacts corresponding to the rest position, and their upper parts the contacts corresponding to the working position, said movable contact being displaceable in parallel with the inside surfaces of said plates.

3. A device as claimed in claim 1, **characterized in that** the plates are formed by a combination of projecting parts, the movable contact being displaceable in transverse direction to said plates between the projecting parts of a plate that correspond to the rest position and the projecting parts of the other plate that correspond to the working position.

4. A device as claimed in claim 1, **characterized in that** said actuator is a piezoelectric motor including, on the one hand, a part that can be deformed by a piezoelectric or magnetorestrictive effect and a fixed support and, on the other hand, a movable part forming said movable contact, while the piezoelectric effect and the mechanical friction between, on the one hand, the deformable part and its fixed support and, on the other hand, the part forming the movable contact, is provided for provoking alternating deformations of said deformable part along two transversal axes.

## Patentansprüche

1. Antennenschalter zwischen dem Ausgang einer Senderstufe und dem Eingang eine Empfängerstufe mit einem piezoelektrischen Betätigungsgerät mit selbst zwei festen Ankern (21, 22) zur Bildung eines Kondensators und einem beweglichen Kontakt (23) aus einem piezoelektrischen Material, wobei die Innenseiten der besagten Anker zur Bildung von elektrischen Kontakten lokal metallisiert und die Elektroden (28, 29) für die Zufuhr einer dazu fähigen Steuerspannung zu dem besagten beweglichen Kontakt vorgesehen sind, ihn zu verformen, und die besagte Verformung zwischen einer so genannten Ruheposition entsprechend einem bestimmten Teil der Anker und einer so genannten Arbeitsposition entsprechend einem anderen bestimmten Teil der besagten Anker stattfindet.

2. Vorrichtung nach Anspruch 1, **dadurch gekennzeichnet, dass** die jeweiligen unteren Teile der besagten Innenseiten die Kontakte entsprechend der Ruheposition und ihre oberen Teile die Kontakte entsprechend der Arbeitsposition bilden, wobei der besagte bewegliche Kontakt parallel zu den Innenseiten der besagten Anker versetzbar ist.

3. Vorrichtung nach Anspruch 1, **dadurch gekennzeichnet, dass** die Anker aus einer Verbindung von heraustretenden Teilen gebildet werden, wobei der bewegliche Kontakt zu den besagten Ankern zwischen den heraustretenden Teilen eines Ankers, der der Ruheposition entspricht, und den heraustretenden Teilen des anderen Ankers, der der Arbeitsposition entspricht, transversal versetzbar ist.

4. Vorrichtung nach Anspruch 1, **dadurch gekennzeichnet, dass** das besagte Betätigungsgerät ein piezoelektrischer Motor mit einerseits einem durch piezoelektrische oder magnetostriktive Wirkung verformbaren Teil und einem festen Träger und andererseits einem beweglichen Teil zur Bildung des besagten beweglichen Kontakts ist, wobei die piezoelektrische Wirkung und die mechanische Friktion zwischen einerseits dem verformbaren Teil und seinem festen Träger und andererseits dem Teil zur Bildung des beweglichen Kontakts vorgesehen ist, um abwechselnd Verformungen am besagten verformbaren Teil entsprechend seinen beiden transversalen Achsen auszulösen.
